# EUROPEAN PATENT SPECIFICATION

(11) **EP 1 735 864 B1**
(45) Date of publication and mention of the grant of the patent: **07.01.2015**
(21) Application number: 05721533.7
(22) Date of filing: 18.03.2005
(51) Int. Cl.: H01M 4/88, H01M 8/12, H01M 4/90, H01M 8/02

(54) **ELECTROLYTE ELECTRODE ASSEMBLY AND METHOD OF PRODUCING THE SAME**
ELEKTROLYT-ELEKTRODENBAUGRUPPE UND HERSTELLUNGSVERFAHREN DAFÜR
ENSEMBLE ÉLECTRODE ÉLECTROLYTIQUE ET PROCÉDÉ DE FABRICATION DUDIT ENSEMBLE

(30) Priority: 24.03.2004 JP 2004085851
(43) Date of publication of application: 27.12.2006
(73) Proprietor: HONDA MOTOR CO., LTD., Tokyo 107-8556 (JP)
(72) Inventor: YAMADA, Takayuki, c/o KABUSHIKI KAISHA HONDA GIJUTSU KENKYUSHO, Wako-shi, Saitama 3510193 (JP)
(74) Representative: Taylor, Adam David
(86) International application number: PCT/JP2005/005606
(87) International publication number: WO 2005/091406

(56) References cited:
- EP-A- 1 202 369
- EP-A- 1 209 753
- EP-A- 1 531 511
- WO-A-2004/068622
- PATENT ABSTRACTS OF JAPAN vol. 1996, no. 12, 26 December 1996 (1996-12-26) & JP 08 208333 A (SHINAGAWA REFRACT CO LTD), 13 August 1996 (1996-08-13)
- PATENT ABSTRACTS OF JAPAN vol. 1999, no. 10, 31 August 1999 (1999-08-31) & JP 11 130595 A (DAIICHI KIGENSOKAGAKU KOGYO CO LTD), 18 May 1999 (1999-05-18)
- PATENT ABSTRACTS OF JAPAN vol. 1999, no. 08, 30 June 1999 (1999-06-30) & JP 11 071169 A (KAWAGUCHI MIYUKI), 16 March 1999 (1999-03-16)
- PATENT ABSTRACTS OF JAPAN vol. 2003, no. 01, 14 January 2003 (2003-01-14) & JP 2002 252005 A (HONDA MOTOR CO LTD), 6 September 2002 (2002-09-06)

## Description

### Technical Field

The present invention relates to an electrolyte electrode assembly sandwiched between a pair of separators. The electrolyte electrode assembly includes an anode, a cathode, and an electrolyte interposed between the anode and the cathode. Further, the present invention relates to a method of producing the electrolyte electrode assembly.

### Background Art

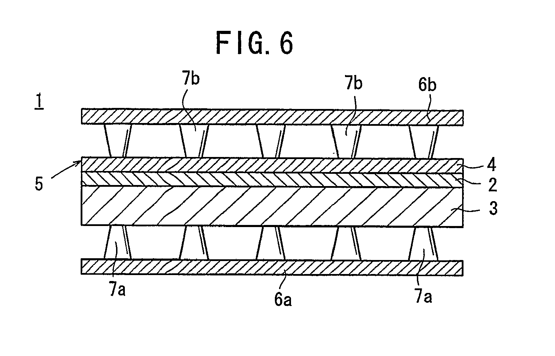

FIG. 6 is a longitudinal sectional view schematically showing main components of a unit cell 1 of a solid oxide fuel cell (SOFC). The unit cell 1 is formed by sandwiching an electrolyte electrode assembly 5 between a pair of separators 6a, 6b. The electrolyte electrode assembly 5 includes an anode 3, a cathode 4, and a solid electrolyte 2 comprising an oxide ion (O²⁻) conductor interposed between the anode 3 and the cathode 4.

A plurality of bosses 7a, 7b are provided on the separators 6a, 6b. The bosses 7a, 7b protrude toward the anode 3 or the cathode 4. Therefore, recesses are provided between the bosses 7a, and between the bosses 7b, respectively. That is, only the bosses 7a, 7b of the separators 6a, 6b contact the anode 3 or the cathode 4. The recess of the separator 6a defined by the bosses 7a which contact the anode 3 is used as a first flow field for supplying a fuel gas to the anode 3. The recess of the separator 6b defined by the bosses 7b which contact the cathode 4 is used as a second flow field for supplying an oxygen-containing gas to the cathode 4.

The SOFC is formed by stacking a predetermined number of the unit cells 1 having the above structure. The fuel gas (e.g., a hydrogen-containing gas) flows through the first flow field, and the oxygen-containing gas (e.g., the air) flows through the second flow field for starting operation.

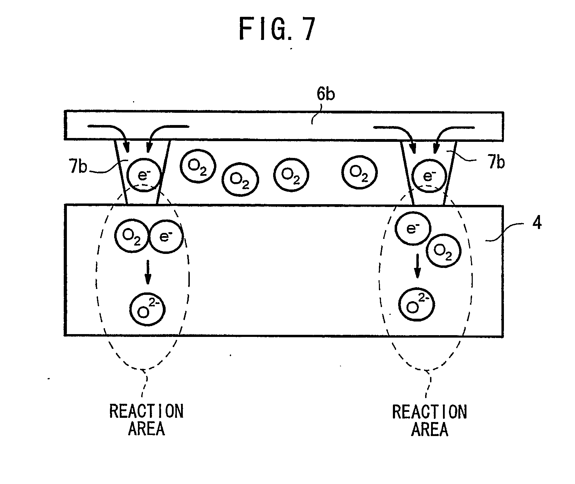

During operation, as shown in an exploded view in FIG. 7, at the cathode 4, electrons which have reached the cathode 4 through the bosses 7b of the separator 6b react with oxygen in the oxygen-containing gas. As a result, oxide ions (O²⁻) are generated. The oxide ions pass through the electrolyte to reach the anode 3, and react with hydrogen in the fuel gas supplied to the anode 3. Thus, water and electrons are generated. The electrons are used as electrical energy for energizing an external load electrically connected to the fuel cell. Then, the electrons pass through the bosses 7b of the separator 6b to reach the cathode 4.

As can be understood from the above, entry of the electrons toward the cathode 4 occurs only at the bosses 7b. Therefore, reaction of the oxygen and electrons does not occur easily in the area remote from the bosses 7b. Stated otherwise, the reaction area of the fuel cell is small disadvantageously.

In order to increase the reaction area, the number of the bosses 7b should be increased. However, if the number of the bosses 7b is large, it is difficult to form the separator 6b, and the oxygen-containing gas does not flow easily.

According to the proposal of Japanese Laid-Open Patent Publication No. 2003-7318, a current collector is disposed between a cathode (oxidant electrode) and a separator, and nonoxide metal such as Ag, Au, Pt, and Pd is scattered between the cathode and the current collector. According to the disclosure of Japanese Laid-Open Patent Publication No. 2003-7318, the exchange current density at the contact interface between the cathode and the current collector is increased to reduce the contact resistance, and the improvement in the performance of the fuel cell is achieved.

In the proposal of Japanese Laid-Open Patent Publication No. 2002-358980, in order to improve the power generation efficiency of a fuel cell, current collectors are disposed between a cathode, an anode, and separators, and at least one of the current collectors is made of porous body having the porosity which gets higher in the direction from the electrode toward the separator.

In the proposal of Japanese Laid-Open Patent Publication No. 2003-243001, a cylindrical fuel cell has an interconnector having a function like a separator. The interconnector has dual layer structure including a lantern chromite layer and a mixture layer of lantern chromite and oxide nickel or triple layer structure further including an oxide nickel layer in addition to the two layers to improve the electron conductivity, and reduce the contact resistance with the current collector material. Japanese Laid-Open Patent Publication No. 5-251092 also discloses provision of a layer on the separator.

However, in the technique disclosed in Japanese Laid-Open Patent Publication No. 2003-7318, since the metal powder is scattered, it is not possible increase the reaction area. Further, since the metal does not have the capability of inducing oxygen reduction, it is not possible to improve the efficiency in the oxygen reduction reaction at the cathode.

In fabricating the electrolyte (porous body) disclosed in Japanese Laid-Open Patent Publication No. 2002-358980, it is necessary to change the porosity of the porous body gradually. In order to provide such a porous body, the operating environment needs to be managed strictly, and such management is laborious.

In the technique disclosed in Japanese Laid-Open Patent Publication No. 2003-243001 or Japanese Laid-Open Patent Publication No. 5-251092, the interconnector or the separator has multiple layer structure. Even if the separator 6b of the unit cell 1 has the multiple layer structure, since the separator 6b does not contact the cathode in the area other than the bosses 7b, it is not possible to increase the reaction area.

EP 1383195 A discloses a single cell for a solid oxide fuel cell, wherein a fuel electrode includes a cermet of a catalyst and a solid electrolyte is bonded to one side of a solid electrolyte plate, and an air electrode includes a compound of perovskite type transition metal oxide with a solid electrolyte bonded to the other side.

JP-A-5-251092 discloses a solid electrolyte type fuel cell with alternately laminated single cells and separators. WO 2004/004038 A2 discloses a fuel cell which includes a pair of separators and a plurality of electrolyte electrode assemblies between the separators.

### Disclosure of Invention

A general object of the present invention is to provide an electrolyte electrode assembly which makes it possible to increase the area for oxygen reduction reaction at a cathode.

Another object of the present invention is to provide an electrolyte electrode assembly which makes it possible improve the efficiency of the reduction reaction.

Still another object of the present invention is to provide an electrolyte electrode assembly which makes it possible to reduce the contact resistance between a separator and a cathode, and reduce the overpotential of an SOFC.

Still another object of the present invention is to provide a method of producing the electrolyte electrode assembly easily.

According to an aspect of the present invention, an electrolyte electrode assembly is sandwiched between a pair of separators. The electrolyte electrode assembly comprises an anode, a cathode, and an electrolyte interposed between the anode and the cathode and bosses are formed on said pair of separators. A layer is provided between the cathode and the bosses on one of the separators. The layer comprises material which has electron conductivity higher than that of the cathode, and which is capable of inducing oxygen reduction.

With the structure, the electrons moved toward the separator on the cathode side are diffused over the entire area of the layer. Further, since the layer is capable of inducing oxygen reduction, oxygen in the oxygen-containing gas supplied to the separator on the cathode side is reduced over the entire area of the layer by the electrons diffused into the layer, let alone the area near the contact position between the separator and the cathode.

That is, according to the present invention, it is possible to significantly increase the reaction area for oxygen reduction. Therefore, it is possible to reduce the overpotential.

Further, since the electron conductivity of the layer is higher than that of the cathode, in comparison with the case in which the cathode directly contacts the separator, the contact resistance between the cathode and the separator is reduced.

As described above, according to the present invention, it is possible to reduce the overpotential or the contact resistance. Therefore, even if the fuel cell is operated at large current density, power generation of the high voltage is achieved, i.e., small loss in the voltage is achieved.

According to the disclosure of Japanese Laid-Open Patent Publication No. 2003-501796 (National Publication of a PCT Application), in order to suppress oxidation of a cathode made of copper or copper alloy, the cathode is coated with a layer of anti-oxidation material such as Al₂O₃. That is, also in the invention disclosed in Japanese Laid-Open Patent Publication No. 2003-501796, a layer is provided on the cathode. However, Al₂O₃ is insulating material, and does not have any capability of inducing oxygen reduction. In this respect, the invention disclosed in Japanese Laid-Open Patent Publication No. 2003-501796 is fundamentally different from the present invention.

For example, it is preferable to use complex oxide containing at least a rare-earth element A, a transitional metal element C, and oxygen O as the material of the layer. Further, the material of the layer may further contain an alkaline-earth metal element B. In this case, preferably composition formula of the material is represented by AₓB₁-ₓCO₃ (0.5 ≤ x ≤ 1.0).

Specifically, for example, the rare-earth element A comprises at least one element selected from the group consisting of La, Sm, Nd, and Pr. Further, specifically, for example, the transitional metal element C comprises at least one element selected from the group consisting of Co, Fe, Ni, Cr, Mn, Ga, and Ti. The composite oxide may contain the alkaline-earth metal element B. In this case, specifically, for example, the alkaline-earth metal element B comprises at least one element selected from the group consisting of Ca, Sr, and Ba.

Perovskite complex oxide is given as a typical example of compound of this type.

Preferably, the thickness of the layer is 10 um or less. More preferably, the thickness of the layer is 1 to 5 um. BY reducing the thickness, it is possible to prevent the layer from being peeled off from the cathode due to the difference in the thermal expansion ratio between material of the electron diffusion layer and material of the cathode.

Another aspect of the present invention is characterized by a method of producing an electrolyte electrode assembly. The electrolyte electrode assembly is sandwiched between a pair of separators. The electrolyte electrode assembly includes an anode, a cathode, and an electrolyte interposed between the anode and the cathode, and bosses are formed on said pair of separators.

The method comprises the steps of:
providing the anode;
stacking the electrolyte on the anode for allowing oxide ions to move through the electrolyte, and then, applying a firing process to the anode and the electrolyte;
providing the cathode on the electrolyte after the firing process; and providing a layer on the cathode. The layer comprises material which has electron conductivity higher than that of the cathode, and which is capable of inducing oxygen reduction.

In this manner, it is possible to produce an electrolyte electrode assembly with support layer structure in which the thickness of the anode is the maximum. In this case, the thickness of the electrolyte and the thickness of the cathode are reduced. Thus, it is possible to produce a thin electrolyte electrode assembly. Accordingly, the thickness of the fuel cell in the stacking direction is reduced.

In order to reduce the number of steps, a firing process is applied to the cathode and the layer after the layer is provided on the cathode.

Alternatively, the layer may be provided after applying a firing process to the cathode, and then, a firing process may be applied to the layer.

Still another aspect of the present invention is characterized by a method of producing an electrolyte electrode assembly. The electrolyte electrode assembly is sandwiched between a pair of separators. The electrolyte electrode assembly includes an anode, a cathode, and an electrolyte interposed between the anode and the cathode, and bosses are formed on said pair of separators.

The method comprises the steps of:
providing the electrolyte by applying a firing process to powder of material which is prepared to have oxide ion conductivity;
providing the anode on one surface of the electrolyte; providing the cathode on the other surface of the electrolyte; and
providing a layer on an exposed surface of the cathode. The layer comprises material which has electron conductivity higher than that of the cathode, and which is capable of inducing oxygen reduction.

In this manner, it is possible to produce an electrolyte electrode assembly with self-support layer structure. That is, according to the present invention, it is possible to produce both of an electrolyte electrode assembly with support layer structure and an electrolyte electrode assembly with self-support layer structure.

In order to minimize the number of steps, the anode is stacked on one surface of the electrolyte, and the cathode is stacked on the other surface of the electrolyte, then, the layer is stacked on the cathode, and subsequently, a firing process is applied to the anode, the cathode, and the layer simultaneously.

In another production method, a firing process is applied to the anode, then, the cathode and the layer are stacked on the electrolyte, thereafter, a firing process is applied to the cathode and the layer. In still another production method, (i) a firing process is applied to the anode, then, (ii) the cathode is stacked on the electrolyte, then, (iii) a firing process is applied to the cathode, then, (iv) the layer is stacked on the cathode, and then, a firing process is applied to the layer.

The above and other objects, features and advantages of the present invention will become more apparent from the following description when taken in conjunction with the accompanying drawings in which preferred embodiments of the present invention are shown by way of illustrative example.

### Brief Description of Drawings

FIG. 1 is a longitudinal sectional view schematically showing main components of a unit cell of a fuel cell having an electrolyte electrode assembly according to an embodiment of the present invention;
FIG. 2 is an enlarged view showing main components in FIG. 1;
FIG. 3 is a graph showing the change of the terminal voltage in a case where power generation is performed in each of the unit cell in FIG. 1 and a conventional unit cell at various current densities;
FIG. 4 is a flowchart showing a method of producing an electrolyte electrode assembly with support layer structure;
FIG. 5 is a flowchart showing a method of producing an electrolyte electrode assembly with self-support layer structure;
FIG. 6 is a longitudinal sectional view schematically showing main components of a unit cell of a fuel cell having a conventional electrolyte electrode assembly; and
FIG. 7 is an enlarged view showing main components in FIG. 6.

### Best Mode for Carrying Out the Invention

An electrolyte electrode assembly and a method of producing the electrolyte electrode assembly according to preferred embodiments of the present invention will be described in detail with reference to the drawings. The constituent elements that are identical to those shown in FIGS. 6 and 7 are labeled with the same reference numeral, and description thereof is omitted.

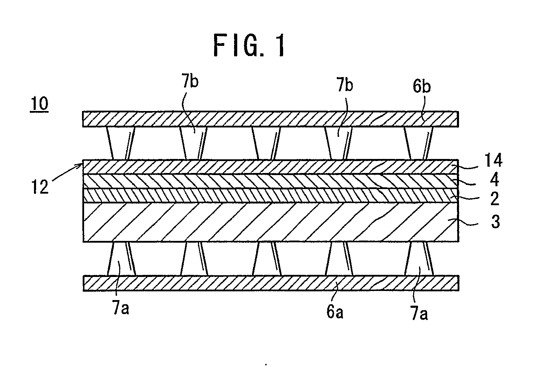

FIG. 1 is a longitudinal sectional view schematically showing main components of a unit cell of a fuel cell having an electrolyte electrode assembly according to the embodiment of the present invention. In the unit cell 10, a solid electrolyte 2 is interposed between an anode 3 and a cathode 4. The solid electrolyte 2, the anode 3, and the cathode 4 are jointed together to form an electrolyte electrode assembly 12.

The anode 3 is made of NiO/8YSZ as a sintered body of mixed powder of Ni and stabilized ZrO₂(YSZ) doped with about 8 mol% Y₂O₃. The cathode 4 is made of La_{0.6}Sr_{0.4}Fe_{0.8}CO_{0.2}O₃ as perovskite oxide. The solid electrolyte 2 is made of YSZ.

The electrolyte electrode assembly 12 further includes an electron diffusion layer 14 provided on one surface of the cathode 4. Material of the electron diffusion layer 14 has electron conductivity higher than material of the cathode 4, i.e., La_{0.6}Sr_{0.4}Fe_{0.8}CO_{0.2}O₃, and is capable of inducing oxygen reduction. For example, preferably, the material of the electron diffusion layer 14 includes, but not limited to, complex oxide containing at least a rare-earth element A, a transitional metal element C, and oxygen O. The composition formula of this type of composite oxide is represented by ACO₃.

For example, it is preferable that the rare-earth element A comprises at least one element selected from the group consisting of La, Sm, Nd, and Pr. Further, for example, it is preferable that the transitional metal element C comprises at least one element selected from the group consisting of Co, Fe, Ni, Cr, Mn, Ga and Ti. A specific example of the composite oxide is LaCoO₃.

The complex oxide may comprise material where part of the rare-earth element A is substituted by an alkaline-earth metal element B. That is, it is possible to use the complex oxide having composition formula represented by AₓB₁₋ₓCO₃ (where 0.5 ≤ x ≤ 1.0).

For example, it is preferable that the alkaline-earth material B comprises at least one element selected from the group consisting of Ca, Sr, and Ba. A specific example of the complex oxide containing the alkaline-earth metal element B is La_{0.5}Sr_{0.5}CoO₃.

If the electron diffusion layer 14 is excessively thick, when the fuel cell is warmed up to an operating temperature, the electron diffusion layer 14 may be peeled off from the cathode 4 due to the difference in the thermal expansion ratio between the electron diffusion layer 14 and the cathode 4. In order to avoid the problem, it is preferable that the thickness of the electron diffusion layer 14 is 10 µm or less. More preferably, the thickness of the electron diffusion layer 14 is in the range of 1 to 5 µm.

The electrolyte electrode assembly 12 having the above structure is sandwiched between a pair of separators 6a, 6b to form the unit cell 10. Bosses 7a, 7b are formed on the separators 6a, 6b, respectively. A first flow field or a second flow field is formed between the bosses 7a, 7b. A fuel gas flows through the first flow field, and an oxygen-containing gas flows through the second flow field.

In general, the electrolyte electrode assembly 12 according to the embodiment of the present invention has the structure as described above. Next, operation and advantages of the electrolyte electrode assembly 12 will be described.

The fuel cell is formed by stacking a predetermined number of the unit cells 10. A fuel gas (e.g., hydrogen-containing gas) and an oxygen-containing gas (e.g., air) are supplied from the outside. The fuel gas flows along the separator 6a, and the oxygen-containing gas flows along the separator 6b to start operation.

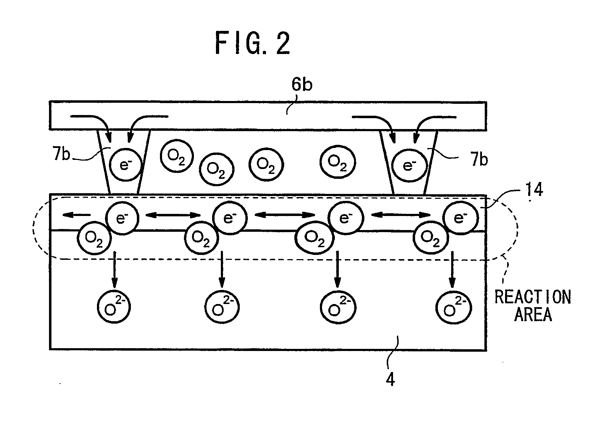

The fuel gas flows through the first flow field (between the bosses 7a) to reach the anode 3, and the oxygen-containing gas flows through the second flow field (between the bosses 7b) to reach the entire surface area of the electron diffusion layer 14. At this time, as shown in an enlarged view in FIG. 2, electrons which have been produced at the anode, and passed through an external load reach the bosses 7b of the separator 6b at the cathode 4.

The electrons move from the bosses 7b to the electron diffusion layer 14. Since the electron conductivity of the electron diffusion layer 14 is high in comparison with the cathode 4, this movement of electrons occurs easier than the movement of electrons directly from the bosses 7b to the cathode 4. That is, since the electrons move from the bosses 7b to the cathode 4 through the electron diffusion layer 14, reduction of the contact resistance is achieved. Since the electron diffusion layer 14 has the electron conductivity, the electrons are diffused over the entire area of the electron diffusion layer 14.

As described above, the electron diffusion layer 14 is made of material which is capable of inducing oxygen reduction. For example, the electron diffusion layer 14 is made of LaCoO₃ or La_{0.5}Sr_{0.5}CoO₃. Therefore, oxygen in the oxygen-containing gas diffused over the entire surface area of the electron diffusion layer 14 is reduced by reaction with the electrons moving from the bosses 7b, and ionized into oxide ions.

The reduction reaction occurs over the entire area of the electron diffusion layer 14. It is because as with oxygen, the electrons moving from the bosses 7b are diffused over the entire area of the electron diffusion layer 14. As can be understood from the above, by providing the electron diffusion layer 14 to produce the electrolyte electrode assembly 12, it is possible to significantly increase the reaction area in comparison with the case of the conventional electrolyte electrode assembly 5 (see FIG. 6) in which reduction reaction occurs only in the area near the bosses 7b at the cathode 4. In the fuel cell including the electrolyte electrode assembly 12 having the large reaction area, reduction of the overpotential is achieved.

That is, in the embodiment of the present invention, since the contact resistance and the overpotential are reduced, the internal resistance of the fuel cell is reduced. Thus, in the fuel cell, even if power generation is performed at large current density, the degree of voltage drop is reduced.

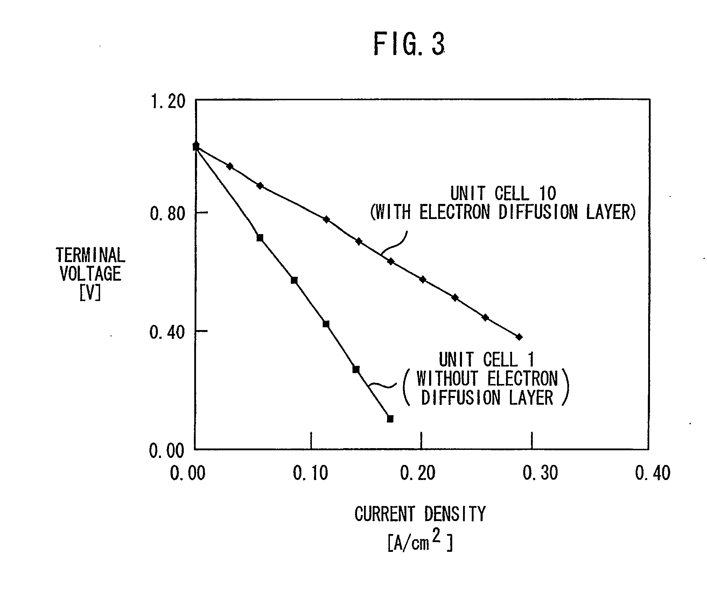

FIG. 3 shows the terminal voltage measured in a power generation test which was performed at various current densities for each of the unit cell 1 including the electrolyte electrode assembly 5 which does not have the electron diffusion layer 14 and the unit cell 10 according to the embodiment of the present invention which has the electrolyte electrode assembly 12 with the electron diffusion layer 14. In both of the unit cells 1, 10, the anode 3 was made of NiO/8YSZ, the solid electrolyte 2 was made of YSZ, and the cathode 4 was made of La_{0.6}Sr_{0.4}Fe_{0.8}Co_{0.2}O₃. The electron diffusion layer 14 of the unit cell 10 was made of LaCoO₃. In the power generation test, the operating temperature of the unit cells 1, 10 was 700°C, the flow rate of hydrogen was 20 ml/minute, and the flow rate of the air was 100 ml/minute.

It is apparent from FIG. 3 that, as described above, the presence of the electron diffusion layer 14 is effective to reduce the voltage drop even if the power generation cell (fuel cell) is operated for power generation at high current density.

The electrolyte electrode assembly 12 can be produced in the following manner.

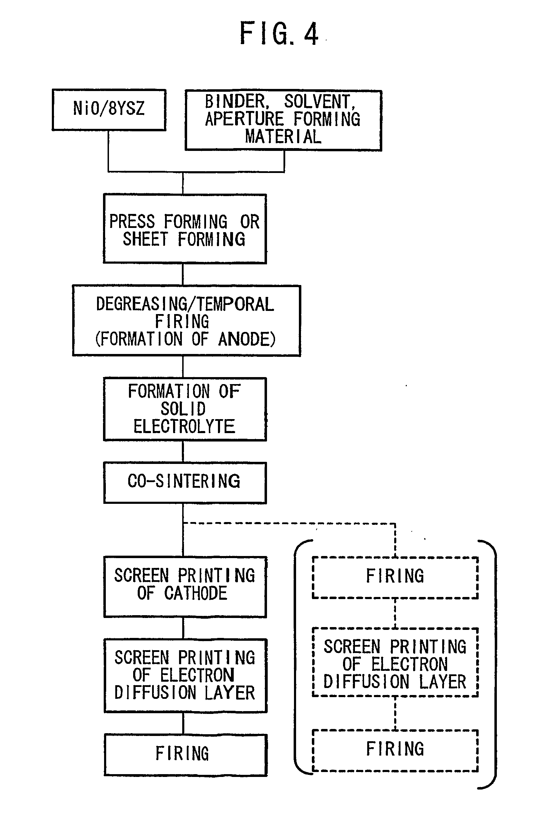

Firstly, a production method of the electrolyte electrode assembly 12 with support layer structure will be described with reference to FIG. 4.

In this case, firstly, the anode 3 is fabricated. Specifically, mixed powder of NiO and YSZ is used in press forming or sheet forming together with binder, solvent, and aperture forming material to have the shape of the anode 3. After degreasing the formed body, the formed body is fired temporarily to produce a temporarily fired body.

Then, paste of YSZ is printed on one surface of the temporarily fired body. A known method such as screen printing can be adopted as the printing method. Thereafter, the temporarily fired body is fired at about 1400° C to produce a sintered body as the anode 3, and provide the solid electrolyte 2.

Then, paste of La_{0.6}Sr_{0.4}Fe_{0.8}Co_{0.2}O₃ is printed on the solid electrolyte 2. Further, paste of, e.g., LaCo₃ or La_{0.5}Sr_{0.5}CoO₃ is printed on the paste of La_{0.6}Sr_{0.4}Fe_{0.8}Co_{0.2}O₃ to produce the electron diffusion layer 14. After a firing process at the temperature of 1000° through 1200° C, the cathode 4 is produced on the solid electrolyte 2, and the electron diffusion layer 14 is produced on the cathode 4.

In this case, since the thickness of the solid electrolyte 2 and the thickness of the cathode 4 are reduced, it is possible to reduce the thickness of the electrolyte electrode assembly 12, and reduce the thickness of the fuel cell in the stacking direction advantageously.

Alternatively, as shown by broken lines or parentheses in FIG. 4, after printing the paste of La_{0.6}Sr_{0.4}Fe_{0.8}Co_{0.2}O₃ on the solid electrolyte 2, the cathode 4 may be provided by a firing process. In this case, paste of the electron diffusion layer 14 is printed on the cathode 4. In this case, though the number of steps is increased, the cathode 4 can be provided reliably.

In any of the cases, alternatively, the electron diffusion layer 14 may be provided by slurry coating.

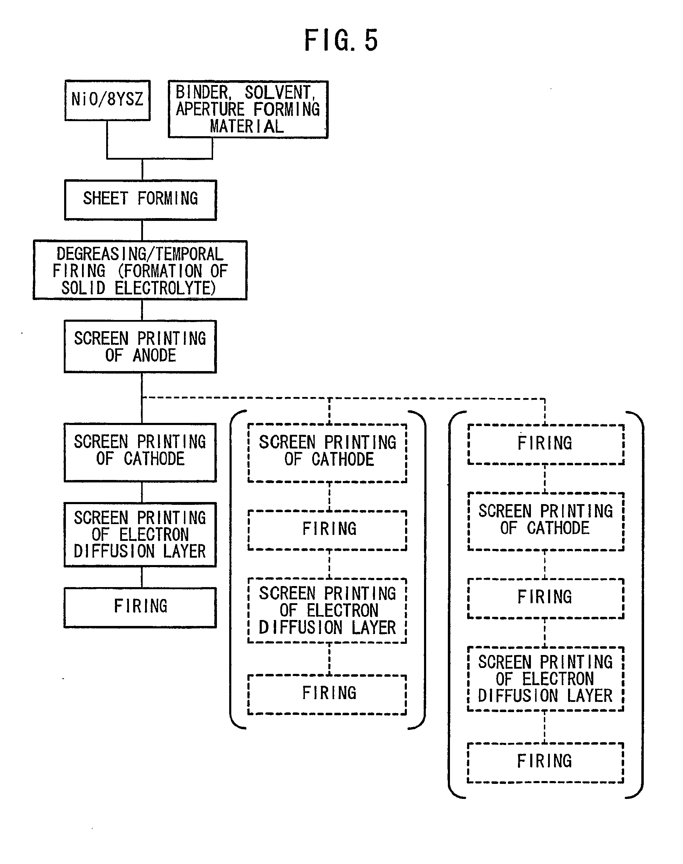

Next, a production method of the electrolyte electrode assembly 12 with self-support layer structure will be described with reference to FIG. 5.

In the production method, firstly, the solid electrolyte 2 is fabricated. That is, powder of 8YSZ is used in sheet forming together with binder and solvent to have the shape of the solid electrolyte 2. After degreasing the formed body, the formed body is fired to provide a sheet of the solid electrolyte 2 made of 8YSZ.

Then, paste of NiO/8YSZ is printed on one surface of the solid electrolyte 2. After printing paste of La_{0.6}Sr_{0.4}Fe_{0.8}Co_{0.2}O₃ on the other surface, paste of LaCo₃ or La_{0.5}Sr_{0.5}CoO₃ is printed on the paste La_{0.6}Sr_{0.4}Fe_{0.8}Co_{0.2}O₃.

Lastly, the three types of paste are fired at the temperature of about 1000° through 1200° C to provide the anode 3 on one surface of the solid electrolyte 2, and provide the cathode 4 and the electron diffusion layer 14 on the other surface. In this manner, the electrolyte electrode assembly 12 is obtained.

In the production method, the electrodes 3, 4 can be provided by firing at a relatively low temperature.

Alternatively, as shown by broken lines or parentheses in FIG. 5, paste of the electron diffusion layer 14 may be printed after providing the cathode 4 by firing. Further, paste of the cathode 4 may be printed after providing the anode 3 by firing, and paste of the electron diffusion layer 14 may be printed after the paste of the cathode 4 is fired to provide the cathode 4.

It is a matter of course that the electron diffusion layer 14 may be provided by slurry coating. In order to produce the unit cell 10 using the electrolyte electrode assembly 12 as obtained above, it is sufficient to provide the separators 6a, 6b on the exposed surfaces of the anode 3 and the cathode 4.

While the invention has been particularly shown and described with reference to preferred embodiments, it will be understood that variations and modifications can be effected thereto by those skilled in the art without departing from the scope of the invention as defined by the appended claims.

## Claims

1. An electrolyte electrode assembly (12) sandwiched between a pair of separators (6a, 6b), said electrolyte electrode assembly (12) comprising an anode (3), a cathode (4), and an electrolyte (2) interposed between said anode (3) and said cathode (4), and bosses (7a, 7b) being formed on said pair of separators
**characterised in that** a layer (14) is provided between said cathode (4) and said bosses (7b) on said one of said separators (6a, 6b), said layer (14) comprising material which has electron conductivity higher than that of said cathode (4), and which is capable of inducing oxygen reduction.

2. An assembly (12) according to claim 1, wherein said layer (14) comprises complex oxide containing at least a rare-earth element A, a transitional metal element C, and oxygen 0.

3. An assembly (12) according to claim 2, wherein the rare-earth element A comprises at Least one element selected from the group consisting of La, Sm, Nd, and Pr, and the transitional metal element C comprises at least one element selected from the group consisting of Co, Fe, Ni, Cr, Mn, Ga and Ti.

4. An assembly (12) according to claim 2, wherein said layer (14) further contains an alkaline-earth metal element B, and composition formula of material of said layer (14) is AₓB₁₋ₓCO₃ (0.5 ≤ x ≤ 1.0).

5. An assembly (12) according to claim 4, wherein the rare-earth element A comprises at least one element selected from the group consisting of La, Sm, Nd, and Pr, the transitional metal element C comprises at least one element selected from the group consisting of Co, Fe, Ni, Cr, Mn, Ga and Ti, and the alkaline-earth metal element B comprises at least one element selected from the group consisting of Ca, Sr, and Ba.

6. An assembly (12) according to any one of claims 2 through 5, wherein said layer (14) comprises perovskite complex oxide.

7. An assembly (12) according to any one of claims 1 through 6, wherein said layer (14) has a thickness of 10 µm or less.

8. A method of producing an electrolyte electrode assembly (12) sandwiched between a pair of separators (6a, 6b), said electrolyte electrode assembly (12) including an anode (3), a cathode (4), and an electrolyte (2) interposed between said anode (3) and said cathode (4), and bosses (7a, 7b) being formed on said pair of separators, said method comprising the steps of:
providing said anode (3);
stacking said electrolyte (2) on said, anode for allowing oxide ions to move through said electrolyte (2), and then, applying a firing process to said anode (3) and said electrolyte (2);
providing said cathode (4) on said electrolyte (2) after the firing process; and providing a layer (14) on said cathode (4), said layer (14) comprising material which has electron conductivity higher than that of said cathode (4), and which is capable of inducing oxygen reduction.

9. A method of producing an electrolyte electrode assembly (12) according to claim 8, wherein a firing process is applied to said cathode (4) and said layer (14) after said layer (14) is provided on said cathode (4).

10. A method of producing an electrolyte electrode assembly (12) according to claim 8, wherein said layer (14) is provided after applying a firing process to said cathode (4), and then, a firing process is applied to said layer (14).

11. A method of producing an electrolyte electrode assembly (12) sandwiched between a pair of separators (6a, 6b), said electrolyte electrode assembly (12) including an anode (3), a cathode (4), and an electrolyte (2) interposed between said anode (3) and said cathode (4), and bosses (7a, 7b) being formed on said pair of separators, said method comprising the steps of:
providing said electrolyte (2) by applying a firing process to powder of material which is prepared to have oxide ion conductivity;
providing said anode (3) on one surface of said electrolyte (2);
providing said cathode (4) on the other surface of said electrolyte (2); and
providing a layer (14) on an exposed surface of said cathode (4), said layer (14) comprising material which has electron conductivity higher than that of said cathode (4), and which is capable of inducing oxygen reduction.

12. A method of producing an electrolyte electrode assembly (12) according to claim 11, wherein said anode (3) is stacked on one surface of said electrolyte (2), and said cathode (4) is stacked on the other surface of said electrolyte (2), then, said layer (14) is stacked on said cathode (4), and subsequently, a firing process is applied to said anode (3), said cathode (4) and said layer (14).

13. A method of producing an electrolyte electrode assembly (12) according to claim 11, wherein, a firing process is applied to said anode (3), then, said cathode (4) and said layer (14) are stacked on said electrolyte (2), thereafter, a firing process is applied to said cathode (4) and said layer (14).

14. A method of producing an electrolyte electrode assembly (12) according to claim 11, wherein (i) a firing process is applied to said anode (3), then, (ii) said cathode (4) is stacked on said electrolyte (3), then, (iii) a firing process is applied to said cathode (4), then, (iv) said layer (14) is stacked on said cathode (4), and then, (v) a firing process is applied to said layer (14).

## Patentansprüche

1. Elektrolyt-Elektrodenanordnung (12), die zwischen einem Paar Trennschichten (6a, 6b) angeordnet ist, wobei die Elektrolyt-Elektrodenanordnung (12) eine Anode (3), eine Katode (4) und ein Elektrolyt (2) umfasst, das zwischen der Anode (3) und der Katode (4) liegt, und wobei Vorsprünge (7a, 7b) an dem Paar Trennschichten ausgebildet sind,
**dadurch gekennzeichnet, dass** eine Schicht (14) zwischen der Katode (4) und den Vorsprüngen (7b) an der einen der Trennschichten (6a, 6b) zur Verfügung gestellt wird, wobei die Schicht (14) Material umfasst, das eine höhere Elektronenleitfähigkeit als das der Katode (4) aufweist, und das in der Lage ist, Sauerstoffreduktion zu induzieren.

2. Anordnung (12) nach Anspruch 1, wobei die Schicht (14) Komplexoxid umfasst, das mindestens ein Seltenerdenelement A, ein Übergangsmetallelement C und Sauerstoff O enthält.

3. Anordnung (12) nach Anspruch 2, wobei das Seltenerdenelement A mindestens ein Element umfasst, das aus der Gruppe ausgewählt wird, die aus La, Sm, Nd und Pr besteht, und das Übergangsmetallelement C mindestens ein einziges Element umfasst, das aus der Gruppe ausgewählt wird, die aus Co, Fe, Ni, Cr, Mn, Ga und Ti besteht.

4. Anordnung (12) nach Anspruch 2, wobei die Schicht (14) des Weiteren ein alkalisches Erdmetallelement B enthält, und eine Verbindungsformulierung von Material der Schicht (14) aus AₓB₁₋ₓCO₃ (0,5 ≤ x ≤ 1,0) besteht.

5. Anordnung (12) nach Anspruch 4, wobei das Seltenerdenelement A mindestens ein Element umfasst, das aus der Gruppe ausgewählt wird, die aus La, Sm, Nd und Pr besteht, das Übergangsmetallelement C mindestens ein Element umfasst, das aus der Gruppe ausgewählt wird, die aus Co, Fe, Ni, Cr, Mn, Ga und Ti besteht, und das alkalische Erdmetallelement B mindestens ein Element umfasst, das aus der Gruppe ausgewählt wird, die aus Ca, Sr und Ba besteht.

6. Anordnung (12) nach einem der Ansprüche 2 bis 5, wobei die Schicht (14) Perowskit-Komplexoxid umfasst.

7. Anordnung (12) nach irgendeinem der Ansprüche 1 bis 6, wobei die Schicht (14) eine Dicke von 10µm oder weniger aufweist.

8. Verfahren zum Herstellen einer Elektrolyt-Elektrodenanordnung (12), die zwischen einem Paar Trennschichten (6a, 6b) angeordnet werden, wobei die Elektrolyt-Elektrodenanordnung (12) eine Anode (3), eine Katode (4) und ein Elektrolyt (2) aufweist, das zwischen der Anode (3) und der Katode (4) liegt, und wobei Vorsprünge (7a, 7b) auf dem Paar Trennschichten ausgebildet werden, wobei das Verfahren die nachfolgenden Schritte umfasst:
Bereitstellen der Anode (3);
Aufbringen des Elektrolyts (2) auf die Anode, um Oxidionen zu ermöglichen, sich durch das Elektrolyt (2) hindurch zu bewegen, und dann Anwenden eines Brennprozesses auf die Anode (3) und das Elektrolyt (2) ;
Bereitstellen der Katode (4) auf dem Elektrolyt (2) nach dem Brennprozess; und Bereitstellen einer Schicht (14) auf der Katode (4), wobei die Schicht (14) Material umfasst, das eine höhere Elektronenleitfähigkeit als das der Katode (4) aufweist, und das in der Lage ist, Sauerstoffreduktion zu induzieren.

9. Verfahren zum Herstellen einer Elektrolyt-Elektrodenanordnung (12) nach Anspruch 8, wobei ein Brennprozess auf die Katode (4) und die Schicht (14) angewendet wird, nachdem die Schicht (14) auf der Katode (4) zur Verfügung gestellt wird.

10. Verfahren zum Herstellen einer Elektrolyt-Elektrodenanordnung (12) nach Anspruch 8, wobei die Schicht (14) nach dem Anwenden eines Brennprozesses auf die Katode (4) zur Verfügung gestellt wird, und dann ein Brennprozess auf die Schicht (14) angewendet wird.

11. Verfahren zum Herstellen einer Elektrolyt-Elektrodenanordnung (12), die zwischen einem Paar Trennschichten (6a, 6b) angeordnet wird, wobei die Elektrolyt-Elektrodenanordnung (12) eine Anode (3), eine Katode (4) und ein Elektrolyt (2) aufweist, das zwischen der Anode (3) und der Katode (4) liegt, und wobei Vorsprünge (7a, 7b) auf dem Paar Trennschichten ausgebildet werden, wobei das Verfahren die nachfolgenden Schritte umfasst:
Bereitstellen des Elektrolyts (2) durch Anwenden eines Brennprozesses auf Materialpulver, das so hergestellt wird, dass es Oxidionenleitfähigkeit aufweist;
Bereitstellen der Anode (3) auf einer Oberfläche des Elektrolyts (2);
Bereitstellen der Katode (4) auf der anderen Oberfläche des Elektrolyts (2); und
Bereitstellen einer Schicht (14) auf einer freiliegenden Oberfläche der Katode (4), wobei die Schicht (14) Material umfasst, das eine höhere Elektronenleitfähigkeit als das der Katode (4) aufweist, und das in der Lage ist, Sauerstoffreduktion zu induzieren.

12. Verfahren zum Herstellen einer Elektrolyt-Elektrodenanordnung (12) nach Anspruch 11, wobei die Anode (3) auf eine Oberfläche des Elektrolyts (2) aufgebracht wird, und die Katode (4) auf die andere Oberfläche des Elektrolyts (2) aufgebracht wird, und dann die Schicht (14) auf die Katode (4) aufgebracht wird, und anschließend ein Brennprozess auf die Anode (3), die Katode (4) und die Schicht (14) angewendet wird.

13. Verfahren zum Herstellen einer Elektrolyt-Elektrodenanordnung (12) nach Anspruch 11, wobei ein Brennprozess auf die Anode (3) angewendet wird, und dann die Katode (4) und die Schicht (14) auf das Elektrolyt (2) aufgebracht werden, und danach ein Brennprozess auf die Katode (4) und die Schicht (14) angewendet wird.

14. Verfahren zum Herstellen einer Elektrolyt-Elektrodenanordnung (12) nach Anspruch 11, wobei (i) ein Brennprozess auf die Anode (3) angewendet wird, und dann (ii) die Katode (4) auf das Elektrolyt (2) aufgebracht wird, und dann (iii) ein Brennprozess auf die Katode (4) angewendet wird, und dann (iv) die Schicht (14) auf die Katode (4) aufgebracht wird, und dann (v) ein Brennprozess auf die Schicht (14) angewendet wird.

## Revendications

1. Ensemble électrode électrolyte (12) intercalé entre une paire de séparateurs (6a, 6b), ledit ensemble électrode électrolyte (12) comprenant une anode (3), une cathode (4) et un électrolyte (2) interposé entre ladite anode (3) et ladite cathode (4), et des bossages (7a, 7b) étant formés sur ladite paire de séparateurs **caractérisé en ce qu'**une couche (14) est située entre ladite cathode (4) et lesdits bossages (7b) sur un desdits séparateurs (6a, 6b), ladite couche (14) comprenant un matériau qui présente une conductivité électronique supérieure à celle de ladite cathode (4) et qui est capable d'induire la réduction de l'oxygène.

2. Ensemble (12) selon la revendication 1, dans lequel ladite couche (14) comprend un oxyde complexe contenant au moins un lanthanide A, un métal de transition C et de l'oxygène O.

3. Ensemble (12) selon la revendication 2, dans lequel le lanthanide A comprend au moins un élément choisi dans le groupe constitué de La, Sm, Nd et Pr, et le métal de transition C comprend au moins un élément choisi dans le groupe constitué de Co, Fe, Ni, Cr, Mn, Ga et Ti.

4. Ensemble (12) selon la revendication 2, dans lequel ladite couche (14) contient en outre un métal alcalino-terreux B, et la formule de composition du matériau de ladite couche (14) est AₓB₁₋ₓCO₃ (0,5 ≤ x ≤ 1,0).

5. Ensemble (12) selon la revendication 4, dans lequel le lanthanide A comprend au moins un élément choisi dans le groupe constitué de La, Sm, Nd et Pr, le métal de transition C comprend au moins un élément choisi dans le groupe constitué de Co, Fe, Ni, Cr, Mn, Ga et Ti, et le métal alcalino-terreux B comprend au moins un élément choisi dans le groupe constitué de Ca, Sr et Ba.

6. Ensemble (12) selon l'une quelconque des revendications 2 à 5, dans lequel ladite couche (14) comprend un oxyde complexe de pérovskite.

7. Ensemble (12) selon l'une quelconque des revendications 1 à 6, dans lequel ladite couche (14) possède une épaisseur inférieure ou égale à 10 µm.

8. Procédé de production d'un ensemble électrode électrolyte (12) intercalé entre une paire de séparateurs (6a, 6b), ledit ensemble électrode électrolyte (12) comprenant une anode (3), une cathode (4) et un électrolyte (2) interposé entre ladite anode (3) et ladite cathode (4), et des bossages (7a, 7b) étant formés sur ladite paire de séparateurs, ledit procédé comprenant les étapes suivantes :
la formation de ladite anode (3) ;
l'empilement dudit électrolyte (2) sur ladite anode pour permettre aux ions d'oxyde de se déplacer à travers ledit électrolyte (2), puis l'application d'un procédé de cuisson à ladite anode (3) et audit électrolyte (2) ;
la formation de ladite cathode (4) sur ledit électrolyte (2) après le procédé de cuisson ; et la formation d'une couche (14) sur ladite cathode (4), ladite couche (14) comprenant un matériau qui présente une conductivité électronique supérieure à celle de ladite cathode (4) et qui est capable d'induire la réduction de l'oxygène.

9. Procédé de production d'un ensemble électrode électrolyte (12) selon la revendication 8, dans lequel un procédé de cuisson est appliqué à ladite cathode (4) et à ladite couche (14) après la formation de ladite couche (14) sur ladite cathode (4).

10. Procédé de production d'un ensemble électrode électrolyte (12) selon la revendication 8, dans lequel ladite couche (14) est formée après l'application d'un procédé de cuisson à ladite cathode (4), puis un procédé de cuisson est appliqué à ladite couche (14).

11. Procédé de production d'un ensemble électrode électrolyte (12) intercalé entre une paire de séparateurs (6a, 6b), ledit ensemble électrode électrolyte (12) comprenant une anode (3), une cathode (4) et un électrolyte (2) interposé entre ladite anode (3) et ladite cathode (4), et des bossages (7a, 7b) étant formés sur ladite paire de séparateurs, ledit procédé comprenant les étapes suivantes :
la formation dudit électrolyte (2) par l'application d'un procédé de cuisson à une poudre de matériau qui est préparé de façon à avoir une conductivité d'ions d'oxyde ;
la formation de ladite anode (3) sur une surface dudit électrolyte (2) ;
la formation de ladite cathode (4) sur l'autre surface dudit électrolyte (2) ; et
la formation d'une couche (14) sur une surface exposée de ladite cathode (4), ladite couche (14) comprenant un matériau qui présente une conductivité électronique supérieure à celle de ladite cathode (4) et qui est capable d'induire la réduction de l'oxygène.

12. Procédé de production d'un ensemble électrode électrolyte (12) selon la revendication 11, dans lequel ladite anode (3) est empilée sur une surface dudit électrolyte (2), et ladite cathode (4) est empilée sur l'autre surface dudit électrolyte (2), puis ladite couche (14) est empilée sur ladite cathode (4) et, ensuite, un procédé de cuisson est appliqué à ladite anode (3), ladite cathode (4) et ladite couche (14).

13. Procédé de production d'un ensemble électrode électrolyte (12) selon la revendication 11, dans lequel un procédé de cuisson est appliqué à ladite anode (3), puis ladite cathode (4) et ladite couche (14) sont empilées sur ledit électrolyte (2) et, ensuite, un procédé de cuisson est appliqué à ladite cathode (4) et à ladite couche (14).

14. Procédé de production d'un ensemble électrode électrolyte (12) selon la revendication 11, dans lequel (i) un procédé de cuisson est appliqué à ladite anode (3), puis, (ii) ladite cathode (4) est empilée sur ledit électrolyte (2), puis (iii) un procédé de cuisson est appliqué à ladite cathode (4), puis (iv) ladite couche (14) est empilée sur ladite cathode (4), puis (v) un procédé de cuisson est appliqué à ladite couche (14).
